# EUROPÄISCHE PATENTSCHRIFT

(11) **EP 2 402 642 B1**
(45) Veröffentlichungstag und Bekanntmachung des Hinweises auf die Patenterteilung: **13.02.2013**
(21) Anmeldenummer: 10006892.3
(22) Anmeldetag: 03.07.2010
(51) Int. Cl.: F16L 51/02, F01D 25/30, F02C 7/20, F23J 13/04

(54) **Kompensator zur Verbindung von Rohren für staubbeladenes Rauchgas**
Compensator for connecting tubes for waste gas containing dust
Compensateur destiné à la liaison de tuyaux pour gaz de fumée chargé en poussière

(43) Veröffentlichungstag der Anmeldung: 04.01.2012
(73) Patentinhaber: DEKOMTE de Temple Kompensatortechnik GmbH, 63500 Seligenstadt (DE)
(72) Erfinder: de Temple, Günther, 63533 Mainhausen (DE)
(74) Vertreter: Pöhner, Wilfried Anton

(56) Entgegenhaltungen:
- US-A- 3 460 856
- US-A- 3 874 711
- US-A- 4 299 414
- US-A- 5 383 316

## Beschreibung

Die Erfindung bezieht sich auf einen Kompensator zur Verbindung eines ersten Rohrstutzens mit einem dazu beabstandeten und dagegen bewegbaren, zweiten Rohrstutzen, bestehend aus einem Einlassrohr, das an der Austrittsöffnung des ersten Rohrstutzens koaxial befestigt ist und einem Auslassrohr, das etwa koaxial zum Einlassrohr angeordnet ist und zu diesem beabstandet ist und an der Eintrittsöffnung des zweiten Rohrstutzens koaxial befestigt ist und einem Gewebekompensator, der Einlassrohr und Auslassrohr miteinander verbindet, wobei alle vorgenannten Rohre von mit Staub beladenem Gas durchströmbar sind, das vom ersten Rohrstutzen zum zweiten Rohrstutzen gerichtet ist, wobei ein hohlzylindrisches Einlassleitblech am Einlassrohr nahe zum ersten Rohrstutzen befestigt ist, dessen Radius etwa dem Innenradius des ersten Rohrstutzens entspricht.

Für Feuerungsanlagen, wie z. B. Heizkraftwerke und Müllverbrennungen, und für alle anderen Anwendungen, bei denen heiße Gase in Rohren zu führen sind, sind die jeweiligen Temperaturen der Rohre abhängig vom jeweiligen Betriebszustand sehr unterschiedlich. Dadurch kommt es zu wärmebedingten Verschiebungen der Rohre in ihrer Längsachse und quer dazu.

Ein wichtiges Ausführungsbeispiel ist eine Großfeuerungsanlage mit einem zirkulierenden Wirbelschichtsystem. Im Kreis der Abgasrückführung verläuft das so genannte Zyklonfallrohr vom Zyklon zum Siphon, der rücklaufende Asche ausschleust. Dieser Rückführungskreis kann nicht als ein durchgehend verschweißtes Rohrsystem aufgebaut werden, da er dann durch die in den verschiedenen Betriebszuständen stark unterschiedliche Temperatur der einzelnen Rohrbereiche und die davon bewirkten, unterschiedlichen Ausdehnungen reißen würde. Deshalb ist die Auftrennung dieses Kreises erforderlich, wobei an der Trennstelle aber wieder zwischen den beiden Rohrstutzen eine Verbindung hergestellt werden muss, die die thermisch bedingten Bewegungen der beiden Rohrstutzen ausgleichen kann.

Nach bekanntem Stand der Technik werden gegeneinander etwas bewegliche Rohrenden durch balgartig angeordnete, flexible Gewebekompensatoren miteinander verbunden, die aus einem textilen Material besteht, das den unter Umständen sehr hohen Betriebstemperaturen Stand halten kann und dabei dauerhaft flexibel ist, sodass es die Bewegungen der beiden Rohrstutzen gegeneinander kompensiert.

Die GS DE 1 760 997, Steinmüller, beschreibt zwei Rauchgasführende Rohrstutzen, die gegeneinander beweglich sind. In diesem Fall wird nur eine Bewegung in axialer Richtung der beiden Rohre ausgeglichen. Dazu sind die beiden Rohrstutzen auf einer kurzen Länge teleskopisch ineinander gesteckt. Dabei ergibt sich eine schmale Fuge zwischen den beiden Rauchgasrohren, die durch einen mehrwelligen Kompensator überdeckt wird. Nachteilig ist, dass nur eine Bewegung der Rohre gegeneinander in axialer Richtung abgefangen werden kann. Ein weiterer, sehr wesentlicher Nachteil ist, dass beim Übergang der Strömung von dem engen in das weitere Rohr und ebenso in umgekehrter Richtung der Durchmesser schlagartig verändert wird, sodass sich an dieser Stelle Wirbel in der Strömung ausbilden, die zur Ablagerung von Feststoffen führen, die von dem strömenden Gas mitgerissen werden.

Auf aktuellem Stand der Technik beschreibt die GS DE 94 02 263, GFG, einen Gewebekompensator, der aus mehreren Lagen besteht: Abwechselnd mit einer Lage eines "Hochtemperatur-Isoliergewebes" wird ein Edelstahlgewebe oder eine Edelstahlfolie eingearbeitet. Dadurch ist der Gewebekompensator gegen sehr hohe Temperaturen beständig und trotzdem in Längsrichtung ebenso wie quer zum Rauchgasstrom bewegbar. Dieser Gewebekompensator wird an seinen beiden Enden mit je einem Metallring gefasst und mittels dieses Ringes an den beiden gasführenden Rohrstutzen befestigt.

Der entscheidende Nachteil dieses Gewebekompensators ist, dass seine Schichten sehr dünn sind, was innerhalb des Kompensators zu einer Abkühlung führt. Ein weiteres Problem ist, dass sich der Querschnitt für die Strömung schlagartig erweitert. Wenn die beiden Rohrstutzen sehr nahe beieinander stehen, bildet der Kompensator sogar eine Tasche aus. Wenn das Rauchgas Feststoffe wie z. B. Asche, auch als Inertmasse bezeichnet, mitführt, lagert sich diese sehr schnell in dem taschenartig ausgewölbten Kompensator ein. Zusätzlich kühlt sie durch die in diesem Bereich mangelhafte Isolierung noch ab und verklumpt und erhärtet dadurch.

In einem typischen Anwendungsfall haben die Aschebestandteile eine Temperatur von rund 900 Grad Celsius, der sich eine Wandstärke des Gewebekompensators von weniger als 1 cm entgegenstellt. Dadurch wird eine deutliche Abkühlung bewirkt, was bei Asche zu einem Verbacken führt, also zu einem Aneinanderhaften der einzelnen Aschebestandteile. Auf diese Weise entstehen krustenartige Ablagerungen innerhalb des Kompensators und an seinem Eingangs- und Ausgangsbereich, die zur Beschädigung des Kompensators und zur Verstopfung der Rauchgasführung in diesem Bereich führen können.

Da der Kompensator in aller Regel Teil einer sehr großen und sehr aufwändigen Anlage mit sehr hohen Betriebskosten ist, sind die Ausfallkosten im Vergleich zur Investitionssumme für den Kompensator in vielen Fällen extrem hoch.

Eine Vorrichtung gattungsgemäßer Art ist aus der Druckschrift US-A-4,299,414 bekannt. Als nachteilig bei derartigen Vorrichtungen ist anzusehen, dass sich der Staub, mit dem das strömende Gas beladen ist, zur Entstehung von krustenartigen Ablagerungen innerhalb des Kompensators beiträgt, die zur Beschädigung und Verstopfung der Vorrichtung führen können.

Um die Ausbildung von Ablagerungen zu vermeiden, hat sich die Erfindung die Aufgabe gestellt, der Abkühlung des Rauchgases entgegenzuwirken.

Gelöst wird diese Aufgabe dadurch, dass das Einlassleitblech mit mehreren, radial verlaufenden Stegen in der Nähe des ersten Rohrstutzens und einem umlaufenden Einlassring fern vom ersten Rohrstutzen verbunden ist, die jeweils am Einlassrohr befestigt sind und ein hohlzylindrisches Auslassleitblech über einen Auslassring am Auslassrohr befestigt ist und dass in den Einlassring eine umlaufende Ausbuchtung eingeformt ist, die in eine auf dem Auslassring umlaufende Einbuchtung hineinragt, wobei das Profil dieser Einbuchtung etwa komplementär zum Profil der Ausbuchtung geformt ist und um den Bewegungsabstand vergrößert ist, der durch die maximalen Bewegungen der beiden Rohrstutzen gegeneinander vorgegeben ist.

Das wesentliche Merkmal der Erfindung ist also das Einlassleitblech, welches den größten Teil des Abstandes zwischen den beiden Rohrstutzen überdeckt und - in erster Annäherung - das Einlassrohr und das Auslassrohr nach innen hin zu einem doppelwandigen Rohr ergänzt. Dieses doppelwandige Rohr ist nur durch den Schlitz zwischen Einlassrohr und Auslassrohr unterbrochen, der jedoch nach außen hin durch den flexiblen Gewebekompensator abgedeckt wird. Nach innen hin ist das "doppelwandige Rohr" durch die beiden Fugen zwischen dem Einlassleitblech und den beiden Rohrstutzen unterbrochen. Diese beiden Fugen sind jedoch unerlässlich, da sich die beiden Rohrstutzen durch unterschiedliche Temperaturen der Anlagenteile gegeneinander bewegen und zwar sowohl in Längs- wie auch in Querrichtung des Kompensators.

Das erfindungsgemäße Einlassleitblech verhindert also, dass Strahlungswärme des Gasstromes ungehindert auf Einlass- und Auslassrohr sowie zwischen der Fuge hindurch auf den Gewebekompensator wirkt. Dadurch wird der Gasstrom nicht so stark ausgekühlt, was das Risiko der Verkrustung durch das Aneinanderhaften von Aschebestandteilen und anderen Staubpartikeln reduziert.

Ein weiterer, noch wichtigerer Vorteil ist, dass das Einlassleitblech Asche, Staub und andere kleine Festkörper zum allergrößten Teil davon abhält, durch die Fugen zwischen Einlassrohr und Auslassrohr auf die Innenseite des Gewebekompensators vorzudringen. Das ist insbesondere deshalb gefährlich, weil die Aschebestandteile dabei abkühlen und deshalb eine Verkrustung innerhalb des Kompensators bilden könnten, die bei Bewegung der beiden Rohrstutzen gegeneinander und der daraus folgenden Bewegung des Gewebekompensators zu dessen Zerstörung führen kann.

Um auch die Fuge zwischen Einlassleitblech und dem zweiten Rohrstutzen zusätzlich gegen das Eindringen von Feststoffen aus dem Gas zu schützen, schlägt die Erfindung vor, dass ein hohlzylindrisches Auslassleitblech an dem Auslassrohr befestigt wird. Dabei überbrückt ein Auslassring den Abstand vom Auslassrohr bis zur Innenfläche des zweiten Rohrstutzens.

Des Weiteren schlägt die Erfindung vor, dass in den - etwa radial verlaufenden - Einlassring eine um 360 Grad umlaufende Ausbuchtung eingeformt ist. Diese Ausbuchtung ragt in eine Einbuchtung auf dem benachbarten Auslassring hinein, wobei das Profil dieser Einbuchtung etwa komplementär zum Profil der Ausbuchtung geformt ist, dabei jedoch um denjenigen Abstand vergrößert ist, der durch die maximalen Bewegungen der beiden Rohrstutzen gegeneinander vorgegeben ist. Dadurch bauen sich für Wärmestrahlen aus dem heißen Gas zwei weitere Wände als Widerstand auf, was einer Abkühlung des Gasstromes entgegen wirkt.

Ohne weitere Schutzmaßnahmen kann in diesem Bereich das Einlassblech über mehrere, radial verlaufende Stege mit dem Einlassrohr verbunden werden. Als Verbindung reicht es aus, dass das Einlassleitblech z.B. mit einem Kragen und/oder einem Absatz darauf aufliegt. Der Vorteil dieser relativ lockeren Verbindung ist, dass Relativbewegungen zwischen dem Einlassleitblech und den Stegen möglich sind.

Als Option wird eine zusätzliche Unterstützung des Einlassleitbleches im Bereich der Mitte des Kompensators vorgeschlagen, wo ein Einlassring an der Innenseite des Einlassrohres befestigt ist und im Profil des Kompensators den Abstand vom außen angeordneten Einlassrohr zum innen angeordneten Einlassleitblech zum größten Teil überbrückt.

Zusätzlich oder alternativ kann das Einlassleitblech auch mit diesem Einlassring verbunden werden, der auf der vom ersten Rohrstutzen weiter entfernten Seite des Einlassbleches angeordnet ist. Auch hier ist es eine sinnvolle Alternative, dass das Einlassleitblech nur mit einem Absatz, einem Haltewinkel oder einem anderen, ähnlichen Fortsatz auf dem Einlassring aufliegt, weil es dann nämlich gegenüber dem Einfassring relativ bewegbar ist.

In einer Ausführungsvariante wird das Eindringen von Asche durch die Fuge zwischen Einlassleitblech und erstem Rohrstutzen durch eine Düse reduziert, die in der Austrittsöffnung des ersten Rohrstutzens angeordnet ist. Innerhalb dieser Düse verjüngt sich der Innenradius des ersten Rohrstutzens, sodass sich am Ausgang der Düse die Fließgeschwindigkeit des Gases erhöht und dadurch ein Unterdruck in dem Spalt zwischen der Düse und dem Einlassleitblech entsteht. Dieser Unterdruck wirkt dem Eindringen von Fremdkörpern in den Hohlraum zwischen Leitblech und den beiden Rohren entgegen.

Wenn kleine Festkörper und Partikel aus dem im Rauchgas enthaltenen Staub und aus der mitgerissenen Asche in die Toträume eingedrungen sind, dann haften sie an den Wänden dieser Toträume besonders fest an, wenn sie elektrostatisch aufgeladen sind. Diese elektrostatische Aufladung bildet sich durch die intensive und mehrfache Berührung der Partikel untereinander und mit den Wänden des Rohrstutzens. Zur Ableitung dieser elektrostatischen Aufladung ist eine gute Erdung aller Teile, die die Partikel berühren können sehr wirkungsvoll. Deshalb muss die elektrische Erdung einen möglichst niedrigen elektrischen Widerstand aufweisen, also über möglichst große Leiterquerschnitte erfolgen. Eine Möglichkeit zur Erdung sind separate Erdungskabel für jedes Bauteil. Es kann auch ein gemeinsames Erdungskabel von Bauteil zu Bauteil verlegt werden. Geeignet sind auch andere metallene Erdverbindungen, sofern sie einen niedrigen elektrischen Widerstand im Material und an den Verbindungsstellen aufweisen.

Als Variante zur weiteren Verbesserung der Isolationsfähigkeit des Kompensators können zwischen dem Einlassleitblech und den beiden Rohren Isoliermaterialien eingebracht werden, die natürlich den dort herrschenden, maximalen Temperaturen standhalten müssen.

Ebenso ist es sinnvoll, einen Wärmeisolator zwischen dem Gewebekompensator und den Außenwänden von Einlassrohr und Auslassrohr vorzusehen.

Das zusätzliche Isolationsmaterial kann jedoch nicht verhindern, dass durch die Fugen zwischen dem Einlassleitblech und den beiden Rohrstutzen hindurch heißes Gas und damit auch Feststoffpartikel in den Raum zwischen Einlassleitblech und den Einlass- und dem Auslassrohr eindringt. Zum Schutz der Fuge zwischen dem ersten Rohrstutzen und dem Einlassleitblech schlägt die Erfindung eine optionale Düse vor.

Dazu ist an der an der Austrittsöffnung des ersten Rohrstutzens ein Ring angeordnet, dessen Innendurchmesser eingangsseitig dem Durchmesser des ersten Rohrstutzens entspricht und sich dann zu einer Düse verjüngt, indem sich der Innendurchmesser in Richtung des Ausganges weiter reduziert.

Die Schutzwirkung einer solchen Düse ist so gut, dass im Bereich der einlassseitigen Fuge keine weiteren Schutzmaßnahmen vorgeschlagen werden.

Um den Innenraum zwischen dem Einlass- und dem Auslassrohr auf der äußeren Seite und dem Einlassleitblech auf der inneren Seite so groß wie möglich zu gestalten, bevorzugt die Erfindung, dass das Einlassrohr an der Außenfläche des ersten Rohrstutzen befestigt ist und dass das Auslassrohr mit der Außenfläche des zweiten Rohrstutzens verbunden ist. Die Außenfläche der Rohrstutzen entspricht also in etwa auch der Außenfläche des Kompensators. Nur der zusätzliche Gewebekompensator ragt über diese Linie heraus.

Die Innenfläche dieses Auslassleitbleches soll in axialer Richtung des Kompensators die Eintrittsöffnung des zweiten Rohrstutzens überlappen und dabei stets nur einen sehr geringen Abstand zum zweiten Rohrstutzen einnehmen. Dazu muss der Radius des Auslassleitbleches unabhängig von seiner Betriebstemperatur konstant bleiben. Dafür schlägt die Erfindung vor, dass das Ausleitblech aus aneinander grenzenden oder sich überlappenden Hohlzylindersegmenten besteht. Zum Ausgleich von thermisch bedingten Längenänderungen ändert sich entweder eine Fuge zwischen den einzelnen Segmenten oder sich einander überlappende Segmente schieben sich weiter übereinander oder werden von dem benachbarten Segment um ein entsprechendes Stück herunter gezogen, sodass der Radius des gesamten Auslassleitbleches nicht verändert wird.

Bei der Auslegung muss der Radius dieses hohlzylindrischen Ausleitbleches um so viel größer als der Radius des Einlassbleches gewählt werden, das es das Einlassleitblech in Längsrichtung des Kompensators zur einem Teil überdecken kann und dennoch auch bei Bewegungen der beiden Rohrstutzen quer zu ihrer Längsachse nicht an das Einlassleitblech anstößt. Das Auslassleitblech wird - wie erwähnt - über einen Auslassring am Auslassrohr befestigt. Der Auslassring überbrückt also den Abstand zwischen dem Auslassleitblech und dem Auslassrohr.

Der wesentliche Vorteil dieses zusätzlichen Auslassleitbleches ist, dass unabhängig von dem axialen Abstand zwischen den beiden Rohrstutzen die Fuge zwischen dem Einlassleitblech und dem zweiten Rohrstutzen stets durch das überlappende Auslassleitblech in radialer Richtung verschlossen ist, wodurch das Eindringen von Festkörpern in den ringförmigen Hohlraum des Kompensators weiter gebremst wird. Ein weiterer Vorzug ist, dass dadurch die Wärme des Gasstromes ebenfalls zurückgehalten wird.

Um das Eindringen von Festkörpern aus dem rauchbeladenen Staub weiter zu vermindern, schlägt die Erfindung vor, dass sich der - relativ große - Innendurchmesser des zweiten Rohrstutzens von seiner Eintrittsöffnung her beginnend kontinuierlich so weit verengt, bis er etwa auf den Radius des Einlassleitbleches reduziert ist. Durch diesen Kegel wird ein wirbelfreier Übergang der Strömung erreicht, was - ähnlich wie bei der Düse im Einlassbereich - auch für den Spalt zwischen Einlassleitblech und Auslassleitblech das Risiko des Eindringens von Fremdkörpern weiter reduziert.

Um die Fuge zwischen dem Einlassleitblech und dem zweiten Rohrstutzen auch in axialer Richtung möglichst zu verschließen, können in einer Ausführungsvariante das Einlassleitblech und das Auslassleitblech über ein schwimmendes Koppelleitblech miteinander verbunden werden. Dieses Koppelleitblech ist gegenüber einem der beiden Leitbleche in Längsrichtung des Kompensators und gegenüber dem anderen Leitblech in Querrichtung des Kompensators verschiebbar. Dadurch wird der Weg von Festkörpern zwischen dem Einlassleitblech und dem ersten Rohrstutzen hindurch entlang der Innenwand des Auslassleitbleches gestoppt und zwar unabhängig davon, in welcher Position sich die beiden Rohrstutzen zueinander befinden.

Ein weiterer Vorteil ist, dass die Wärmeabstrahlung nach außen weitestgehend blockiert wird und dadurch das Gas nur noch sehr geringfügig abgekühlt wird.

Dennoch lässt sich der Innenraum zwischen dem Einlassleitblech auf der einen Seite und auf der anderen Seite dem Einlass- und dem Auslassrohr nicht absolut hermetisch abdichten, da sich die beiden Rohrstutzen gegeneinander bewegen und sich deshalb auch der Kompensator verformen muss. Deshalb ist es nicht ganz auszuschließen, dass Festkörper aus dem Gas in diese Hohlräume eindringen. Da sich im Prinzip jedoch relativ sehr wenig Materie darin bewegt, werden sie auch "Toträume" genannt. Ein solcher bildet sich zwischen dem ersten Rohrstutzen, dem Einlassrohr, dem Einlassring und dem Einlassleitblech heraus. Ein anderer Totraum entsteht durch die Kombination des zweiten Rohrstutzens mit dem Auslassrohr, dem Auslassring und dem Auslassleitblech. Ein dritter Hohlraum wird etwa in der Mitte des Kompensatorprofils zwischen dem Gewebekompensator, dem Einlassring, dem Auslassring und dem Koppelleitblech gebildet. Wenn wenigstens einer dieser Hohlräume mit Sperrluft beaufschlagt wird, die über ein Rohr von außen zugeführt wird, so wird dadurch eindringenden Fremdkörpern ein weiterer Widerstand entgegen gesetzt.

In Erweiterung dieser Anordnung kann an die Toträume noch ein Rohr angeschlossen werden, das mit einer Absaugvorrichtung verbunden ist. Dadurch können kontinuierlich oder in Intervallen Fremdkörper abgesaugt werden, die trotz aller Maßnahmen dennoch in die Toträume gelangt sind.

Für eine Verbesserung der Wirkung des Kompensators ist es sinnvoll, dass die Rohre und/oder die Ringe und/oder die Leitbleche auf den zu den Toträumen weisenden Flächen mit Isolationsmaterial aufgefüttert sind. Der Komplementärraum zu den Toträumen soll mit Isolierung gefüllt sein. Dadurch vermindern sich die Wärmeverluste des Rauchgases über den Kompensator, was - wie erwähnt - sehr vorteilhaft ist, da auf diese Weise die sich abkühlenden Asche- und Schlackebestandteile eines Rauchgases sich kaum noch verklumpen.

Eine weitere Variante, die das Anhaften von kleinen Festkörpern an den Flächen des Kompensators bremst ist, dass die Rohre, die Ringe und die Leitbleche aus elektrisch leitfähigem Material bestehen und elektrisch leitend verbunden sind. Dadurch wird die elektrostatische Aufladung der Leitbleche vermieden, die ansonsten die Haftungswirkung der Festbestandteile des Gases spürbar erhöht.

In einer weiteren Ausführungsvariante sind ist das das Einlassrohr und das Auslassrohr - zusätzlich zum Gewebekompensator - noch durch ein flexibles Abdichtelement miteinander verbunden, das innerhalb des Gewebekompensators angeordnet ist. Umgeben von dem Einlassrohr und dem flexiblen Abdichtelement und dem Auslassrohr und dem Gewebekompensator entsteht so ein Druckraum, der über den Sperrluftanschluss unter permanenten Überdruck gesetzt werden kann. Damit wird der Gewebekompensator von den Pulsationen im anschließenden Totraum zwischen dem Einlassring und dem Auslassring abgekuppelt. Dadurch wird verhindert, dass die Pulsationen unmittelbar auf den Gewebekompensator einwirken und ihn in eine "Flatterbewegung" versetzen, die seinen raschen Verschleiß zur Folge hätte.

Stattdessen bleiben die Pulsationen als ein Atmen auf den inneren Totraum zwischen einlass- und Auslassring beschränkt. Es werden also zwei Sperrluftkreise gebildet, von denen der innere zwischen Einlass- und Auslassring atmet und der äußere im Wesentlichen mit einem konstanten Druck beaufschlagt ist.

Beide Sperrluftkreise sind von außen her über Anschlüsse zugänglich und können so mit Sperrluft versorgt werden.

Für den Anwendungsfall eines Kompensators, bei dem das Auslassrohr vorrangig nur in axialer Richtung gegen das Einlassrohr bewegbar ist, muss das flexible Abdichtelement nur auf dem Einlass- oder dem Auslassrohr befestigt werden und liegt dann auf dem jeweils anderen Rohr mit einer Lippe oder ähnlichem auf.

Im Folgenden sollen weitere Einzelheiten und Merkmale der Erfindung anhand von drei Beispielen näher erläutert werden. Diese sollen die Erfindung jedoch nicht einschränken, sondern nur erläutern. Es zeigt in schematischer Darstellung:
- Figur 1: Profil eines Kompensators in einfachster Ausführung, die nicht im Rahmen der Erfindung liegt
- Figur 2: Profil eines erfindungsgemäßen Kompensators mit Auslassleitblech, Ringen und Koppelleitblech
- Figur 3: Profil mit gegen die Längsachse geneigtem Einlass- und Auslassring und der Zuführung von Sperrluft

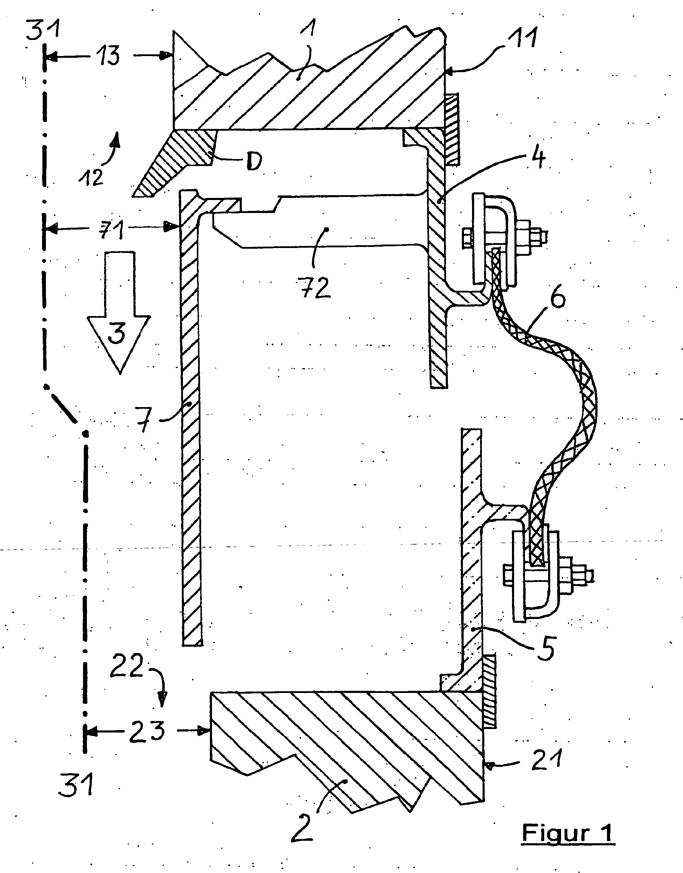

Die Figuren 1 - 3 zeigen das Profil eines Kompensators und zwar mit der rechten Hälfte eines Schnittes entlang der Längsachse. Dabei bezeichnen alle schraffierten Flächen einen Schnitt durch je ein ringförmiges Teil. Alle Profile sind in sich geschlossen, laufen also um die Längsachse 31 mit vollen 360 Grad um. In den Figuren 1 bis 2 ist diese Längsachse 31 - auch als "Längsrichtung 31" bezeichnet -in ihrem Verlauf zweifach geknickt, wodurch dargestellt wird, um welches Maß der zweite Rohrstutzen 2 - in den Figuren unten dargestellt - gegenüber dem ersten Rohrstutzen 1 - in den Zeichnungen oben dargestellt - versetzt ist.

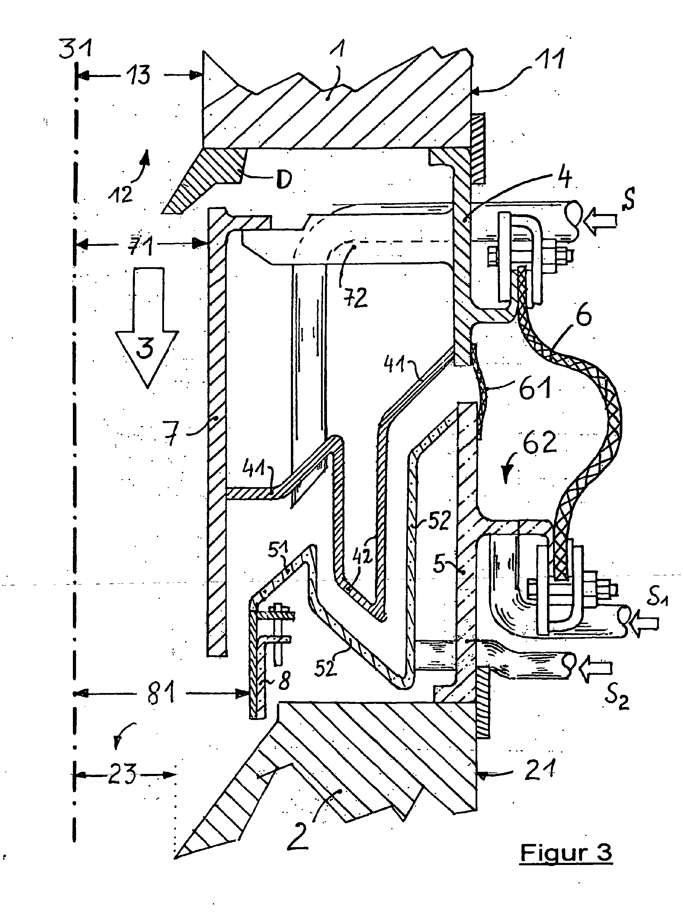

In Figur 3 ist die Längsachse 31 als durchgehende Linie gezeichnet, weil im dargestellten Betriebszustand des dritten Ausführungsbeispiels der erste Rohrstutzen 1 mit dem zweiten Rohrstutzen 2 axial fluchtet.

In Figur 1 ist der zweite Rohrstutzen 2 gegenüber dem ersten Rohrstutzen 1 in der Zeichnung nach rechts und nach unten versetzt. Deshalb fluchten die beiden Außenflächen 11 und 12 des ersten und des zweiten Rohrstutzen 1, 2 nicht miteinander. In axialer Richtung ist der maximale mögliche Abstand der beiden Rohrstutzen noch nicht erreicht, weshalb das Profil des textilen Gewebekompensators 6 noch eine "Falte schlägt".

In Figur 1 ist an der Austrittsöffnung 12 des ersten Rohrstutzens 1 die Düse D befestigt. In Figur 1 wird sehr schnell deutlich, dass in der Düse D der Innenradius 13 des ersten Rohrstutzens 1 verkleinert wird. Wie bei einer Venturi-Düse erhöht sich dadurch die Strömungsgeschwindigkeit in diesem Bereich und es entsteht ein Unterdruck zwischen der Düse D und dem dazu benachbarten Einlassleitblech 7. Dieser Unterdruck verhindert, dass durch den - unvermeidbaren - Spalt zwischen Einlassleitblech 7 und Düse D Rauchgas und darin enthaltene Festkörper in den Hohlraum zwischen Einlassleitblech 7 und Einlassrohr 4 eindringen.

Das Einlassleitblech ist über mehrere - jeweils radial ausgerichtete - Stege 72 am Einlassrohr 4 befestigt. In Figur 1 ist leicht nachvollziehbar, dass das Einlassleitblech 7 in radialer Richtung gegenüber jedem Steg 72 verschiebbar ist.

Die Figur 1 zeigt, dass jeder der beiden Rohrstutzen 1, 2 an seiner Außenfläche 11, 21 das Einlassrohr 4 bzw. das dazu benachbarte Auslassrohr 5 trägt. Die Außenfläche 11 des ersten Rohrstutzens 1 fluchtet mit der Außenfläche des Einlassrohres 4 und die Außenfläche 21 des zweiten Rohrstutzens 2 fluchtet mit der Außenfläche des Auslassrohres 5.

Etwa in Bildmitte ist zu erkennen, dass die Außenfläche des Auslassrohres 5 zu der Außenfläche des Einlassrohres 4 in radialer Richtung einen Abstand aufweist. Dieser Abstand entsteht durch die vorgegebene Bewegung des Rohrstutzens 2 gegenüber dem ersten Rohrstutzen 1. Die dadurch gebildete Fuge wird durch den dauerhaft flexiblen Gewebekompensator 6 überdeckt, der mittels mehrerer Klemmbügel an je einem umlaufenden, L-förmigen Flansch am Einlassrohr 4 und am Auslassrohr 5 befestigt.

Die Widerstandsfähigkeit gegen Festkörper, die direkt auf den flexiblen Gewebekompensator drücken ist jedoch sehr begrenzt. Eine dauerhafte Exponierung zu sehr hohen Temperaturen wie sie das durchströmende Gas 3 aufweist, zehrt ebenfalls sehr an der Lebensdauer des flexiblen Gewebekompensators.

In Figur 1 wird deutlich, dass in der dargestellten, einfachsten Version trotz des schirmenden Einlassleitbleches 7 dennoch Festkörper durch den Spalt zwischen dem Einlassleitblech 7 und dem zweiten Rohrstutzen 2 hindurch gelangen können und sich durch den Spalt zwischen dem Einlassrohr 4 und dem Auslassrohr 5 hindurch in dem Gewebekompensator festsetzen können.

Eine derartige Kontamination wäre aus zwei Gründen äußerst nachteilig: Zum ersten beschädigen die harten Aschepartikel den Gewebekompensator recht schnell, zum zweiten kühlen die Aschebestandteile und anderen Festkörper innerhalb des Gewebekompensators sehr schnell aus, da dieser keinen großen thermischen Schutz gewähren kann. Durch diese Auskühlung verklumpen die Aschebestandteile und bilden noch größere Festkörper, die den flexiblen Gewebekompensator mit erhöhter Wahrscheinlichkeit beschädigen können.

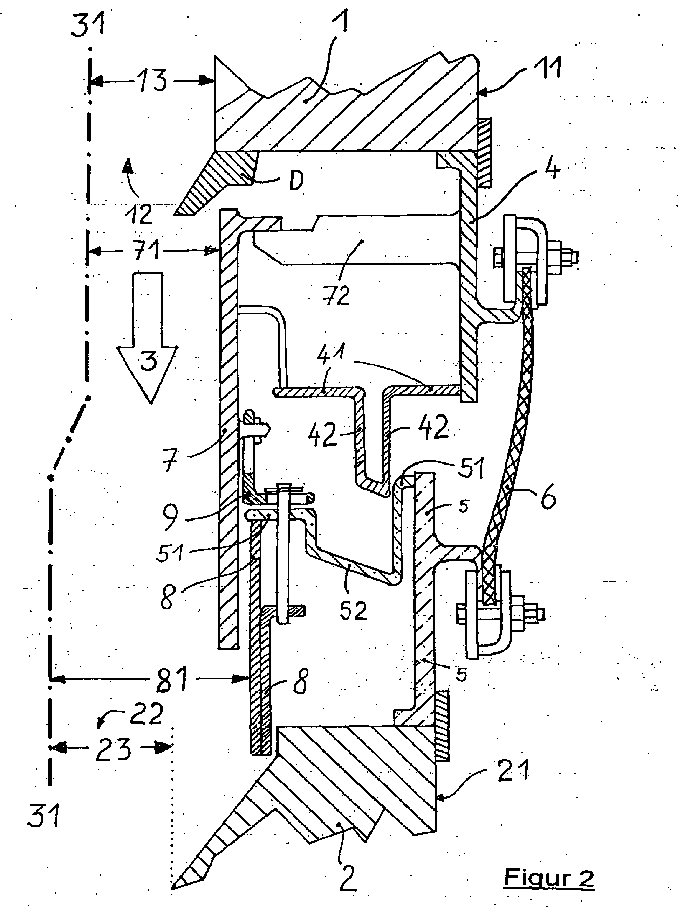

Um diese Nachteile zu vermeiden, schlägt die Erfindungen zusätzliche Ausführungsformen vor, die in den Figuren 2 und 3 dargestellt sind.

Figur 2 zeigt den gleichen Querschnitt wie in Figur 1, jedoch mit zusätzlichen Einbauten und in einem Betriebszustand, in dem der zweite Rohrstutzen 2 gegenüber dem ersten Rohrstutzen 1 nach links abweicht, was auch durch den im Vergleich zu Figur 1 geänderten "Knick" der Längsachse 31 deutlich wird. Dieser geänderte Betriebszustand ist auch an der geänderten Form des Gewebekompensators 6 erkennbar.

In Figur 2 ist erfindungsgemäß der Einlassring 41 im Einlassrohr 4 dargestellt. Er überbrückt den Abstand zwischen dem außen liegenden Einlassrohr 4 und dem innen liegenden Einlassleitblech 7 und dichtet in dieser Variante das Einlassleitblech 7 weiter ab. Ferner besteht die Funktion des Einlassringes 41 darin, die Isolation zu schützen und den Totraum zu begrenzen. Nicht zur wesentlichen Funktion des Einlassringes 41 zählt es, das Einlassleitblech 7 zu tragen.

In den Einlassring 41 ist eine Ausbuchtung 42 eingebracht, die in eine dazu komplementäre, aber um einen bestimmten Abstand vergrößerte Einbuchtung 52 auf dem Auslassring 51hineinragt. In Figur 2. ist zu erkennen, dass diese Einbuchtung 52 um so viel größer ist als die Silhouette der Ausbuchtung 42, dass die Ausbuchtung 42 in allen Bewegungszuständen des zweiten Rohrstutzens 2 gegenüber dem ersten Rohrstutzen 1 innerhalb der Einbuchtung 52 bewegbar ist.

Nacht der Erfindung zeigt die Figur 2 das Auslassleitblech 8 zwischen dem Einlassleitblech 7 und dem zweiten Rohrstutzen 2. In Figur 2 ist gut zu erkennen, dass das Auslassleitblech 8 mehrteilig ist, weil es aus mehreren segmentierten Hohlzylindern besteht, die sich unabhängig von ihrer Temperatur und damit unabhängig von ihrer Ausdehnung stets zu einem Ring mit konstantem Radius ergänzen. Diese Segmente sind in der in Figur 2 gezeigten Ausführungsform mit dem Auslassring 51 verbunden, der am Auslassrohr 5 befestigt ist. Dadurch wird es möglich, das Auslassleitblech 8 direkt an der Innenkante des zweiten Rohrstutzens 2 zu positionieren.

Die Ausführungsvariante in Figur 2 zeigt eine konische Anschrägung der Eintrittsöffnung 22, die gleichmäßig in das Auslassleitblech 8 übergeht. Damit werden an der Kante zwischen dem Auslassleitblech 8 und dem zweiten Rohrstutzen 2 überflüssige Wirbel vermieden und damit das Risiko reduziert, dass in den Spalt zwischen Auslassleitblech 8 und Einlassleitblech 7 zahlreiche, weitere Festpartikel hineingedrückt werden.

In **Figur 3** ist ein anderer Ausbau eines erfindungsgemäßen Kompensators gezeigt.

In dieser Variante sind die Ebenen des Einlassringes 41 und des Auslassringes 51 gegenüber der Längsachse 31 des Kompensators geneigt. Bei vertikaler Ausführung des Kompensators können dadurch Fremdkörper auf dem unteren Bereich des Auslassringes 51 durch ihre Schwerkraft getrieben in den zweiten Rohrstutzen 2 zurück rutschen.

In Figur 3 wird ein Sperrluftsystem mit doppelten Luftkammern gezeigt. Die innere Luftkammer bildet sich in dem Totraum zwischen dem Einlassleitblech 7, dem Einlassring 41 mit der darauf angeordneten Ausbuchtung 42 und dem Auslassring mit der darauf angeordneten Einbuchtung 52. Diese innere Luftkammer ist in der Ausführungsvariante gemäß Figur 3 nach außen zu mit einem flexiblen Abdichtelement 61 geschlossen, der Pulsationen in der inneren Luftkammer von der äußeren Luftkammer, dem Druckraum 62, fernhält oder sie zumindest stark dämpft.

Die innere Luftkammer kann über die Sperrluftanschlüsse S und S1 mit Sperrluft beaufschlagt werden, die Fremdkörper und Partikel am Eindringen hindert. Ebenso hält sie Rauchgase vom Eindringen in den Totraum ab, wo sie abkühlen und dadurch verkrusten könnten.

In Figur 3 wird auch ein zweiter Betriebszustand des Sperrluftkonzeptes in der inneren Luftkammer deutlich. Falls bei vertikaler Anordnung des Kompensators in die Einbuchtung 52 des Auslassringes eingedrungene Fremdkörper dort verbleiben und dadurch die Beweglichkeit der Einbuchtung 52 gegenüber der Ausbuchtung 42 einschränken oder sie blockieren, kann über den oberen SperrluftAnschluss S Sperrluft zugeführt werden und aus dem unteren Sperrluftanschluss S2 Luft abgesaugt werden. Dabei werden in der Einbuchtung 52 festgesetzte Fremdkörper vom Luftstrom mitgerissen und nach außen befördert.

In der Ausführungsvariante gemäß Figur 3 entsteht durch das flexible Abdichtelement, das Einlassrohr, das Auslassrohr und den Gewebekompensator eine weitere Luftkammer, der Druckraum 62. Er kann über den Sperrluftanschluss S1 unter permanenten Überdruck gesetzt werden. In Figur 3 ist sehr gut nachvollziehbar, dass damit der Gewebekompensator 6 von den Pulsationen im angrenzenden Totraum zwischen dem Einlassring 41 und dem Auslassring 51 abgekuppelt wird und so verhindert wird, dass die Pulsationen unmittelbar auf den Gewebekompensator 6 einwirken und ihn in eine "Ftatterbewegung" versetzen, die seinen raschen Verschleiß zur Folge hätte.

Stattdessen bleiben die Pulsationen als ein Atmen auf den inneren Totraum zwischen dem Einlassring 41 und dem Auslassring 51 beschränkt.

Figur 3 zeigt klar die beiden, durch das flexible Abdichtelement 61 voneinander abgetrennten Sperrluftkreise, von denen der innere zwischen Einlassring 41 und Auslassring 51 atmet und der äußere, der Druckraum 62, im Wesentlichen mit einem konstanten Druck beaufschlagt ist.

### Bezugszeichenliste

- 1: erster Rohrstutzen, lässt das Gas 3 ein
- 11: Außenfläche des ersten Rohrstutzens 1
- 12: Austrittsöffnung des ersten Rohrstutzens 1
- 13: Innenradius des ersten Rohrstutzens 1
- 2: zweiter Rohrstutzen, nimmt das Gas 3 auf
- 21: Außenfläche des zweiten Rohrstutzens 2
- 22: Eintrittsöffnung des zweiten Rohrstutzens 2
- 23: Innenradius des zweiten Rohrstutzens
- 3: Gas, strömt vom ersten Rohrstutzen 1 durch das Einlassrohr 4 und das Auslassrohr 5 in den zweiten Rohrstutzen 2
- 31: Längsrichtung des Kompensators, entspricht der Längsachse und der Strömungsrichtung des Gases 3
- 4: Einlassrohr, zwischen erstem Rohrstutzen 1 und Auslassrohr 5
- 41: Einlassring, in Einlassrohr 4
- 42: Ausbuchtung, umlaufend auf dem Einlassring 41
- 5: Auslassrohr, zwischen Einlassrohr 4 und zweitem Rohrstutzen 2
- 51: Auslassring, im Auslassrohr 5
- 52: Einbuchtung, umlaufend im Auslassring 51
- 6: Gewebekompensator, verbindet Einlassrohr 4 mit Auslassrohr 5
- 61: flexibles Abdichtelement, zwischen dem Einlassrohr 4 und dem Auslassrohr 5
- 62: Druckraum, zwischen dem Gewebekompensator 6 und dem flexiblen Abdichtelement 61
- 7: Einlassleitblech, innerhalb des Einlassrohres 4, an Rohrstutzen 1 anschließend
- 71: Radius des Einlassleitbleches 7
- 72: Steg, hält Einlassleitblech 7
- 8: Auslassleitblech, zwischen Einlassleitblech 7 und Auslassring 5
- 81: Radius des Auslassleitbleches 8
- 9: Koppelleitblech, verbindet Einlassleitblech7 und Auslassleitblech8
- D: Düse in der Austrittsöffnung 12 des ersten Rohrstutzens 1
- S: Anschluss für Sperrluft
- S1: Anschluss zur Beaufschlagung des Druckraumes 62
- S2: zweiter Anschluss für Sperrluft zur Druckbeaufschlagung oder Entsorgung des inneren Totraumes zwischen Einlassring 41 und Auslassring 51

## Patentansprüche

1. Kompensator zur Verbindung eines ersten Rohrstutzens (1) mit einem dazu beabstandeten und dagegen bewegbaren, zweiten Rohrstutzen (2), bestehend aus
- einem Einlassrohr (4), das an der Austrittsöffnung (12) des ersten Rohrstutzens (1) koaxial befestigt ist und
- einem Auslassrohr (5),
- das etwa koaxial zum Einlassrohr (4) angeordnet ist und
- zu diesem beabstandet ist und
- an der Eintrittsöffnung (22) des zweiten Rohrstutzens (2) koaxial befestigt ist und
- einem Gewebekompensator (6), der Einlassrohr (4) und Auslassrohr (5) miteinander verbindet, wobei
- alle vorgenannten Rohre (1,2,4,5) von mit Staub beladenem Gas (3) durchströmbar sind, das vom ersten Rohrstutzen (1) zum zweiten Rohrstutzen (2) gerichtet ist, wobei
ein hohlzylindrisches Einlassleitblech (7) am Einlassrohr (4) nahe zum ersten Rohrstutzen (1) befestigt ist, dessen Radius (71) etwa dem Innenradius (13) des ersten Rohrstutzens (1) entspricht, **dadurch gekennzeichnet, dass** das Einlassleitblech (7)
- mit mehreren, radial verlaufenden Stegen (72) in der Nähe des ersten Rohrstutzens (1) und
- einem umlaufenden Einlassring (41) fern vom ersten Rohrstutzen (1) verbunden ist,
die jeweils am Einlassrohr (4) befestigt sind und ein hohlzylindrisches Auslassleitblech (8) über einen Auslassring (51) am Auslassrohr (5) befestigt ist und dass in den Einlassring (41) eine umlaufende Ausbuchtung (42) eingeformt ist,
- die in eine auf dem Auslassring (51) umlaufende Einbuchtung (52) hineinragt, wobei
- das Profil dieser Einbuchtung (52) etwa komplementär zum Profil der Ausbuchtung (42) geformt ist und
- um den Bewegungsabstand vergrößert ist, der durch die maximalen Bewegungen der beiden Rohrstutzen (1,2) gegeneinander vorgegeben ist.

2. Kompensator nach Anspruch 1,
**dadurch gekennzeichnet, dass** das Einlassleitblech (7) dadurch mit den Stegen (72) und dem Einlassring (41) verbunden ist, dass es mit einem Kragen und/oder einem Absatz darauf aufliegt, wobei Relativbewegungen zwischen dem Einlassleitblech (7) und den Stegen (72) und/oder dem Einlassring (41) möglich sind.

3. Kompensator nach einem der vorhergehenden Ansprüche, **dadurch gekennzeichnet, dass** an der Austrittsöffnung des ersten Rohrstutzens (1) eine Düse (D) angeordnet ist, innerhalb derer sich der Innenradius (13) des ersten Rohrstutzens (1) verjüngt.

4. Kompensator nach einem der vorhergehenden Ansprüche, **dadurch gekennzeichnet, dass** die Länge des hohlzylindrischen Einlassleitbleches (7) die Summe der Längen des Einlassrohres (4) und des Auslassrohres (5) nicht überschreitet.

5. Kompensator nach einem der vorhergehenden Ansprüche, **dadurch gekennzeichnet, dass**
- das Einlassrohr (4) an der Außenfläche (11) des ersten Rohrstutzens (1) befestigt ist und/oder
- das Auslassrohr (5) mit der Außenfläche (21) des zweiten Rohrstutzens (2) verbunden ist.

6. Kompensator nach einem der vorhergehenden Ansprüche, **dadurch gekennzeichnet, dass** das hohlzylindrische Auslassleitblech (8),
- das aus aneinandergrenzenden oder sich überlappenden Hohlzylindersegmenten besteht und
- dessen Radius (81) größer als der Radius (71) des Einlassleitbleches (7) ist und
- das das Einlassleitblech (7) in Längsrichtung (31) des Kompensators zu einem Teil überdeckt und
- das über einen umlaufenden Auslassring (51) mit dem Auslassrohr (5) verbunden ist
in die Eintrittsöffnung (22) des zweiten Rohrstutzens (2) übergeht und dabei mit wenigstens einem Hohlzylindersegment teilweise den Rohrstutzen (2) in axialer Richtung überlappt.

7. Kompensator nach Anspruch 3, **dadurch gekennzeichnet, dass** sich der Innendurchmesser (23) des zweiten Rohrstutzens (2) - von seiner Eintrittsöffnung (23) her beginnend - kontinuierlich soweit verengt, bis er etwa auf den Radius (71) des Einlassleitbleches (7) reduziert ist.

8. Kompensator nach einem der vorhergehenden Ansprüche, **dadurch gekennzeichnet, dass** das Einlassleitblech (7) und das Auslassleitblech (8) über ein schwimmendes Koppelleitblech (9) miteinander verbunden sind,
- das gegenüber einem der beiden Leitbleche (7,8) in Längsrichtung (31) des Kompensators verschiebbar ist und
- das gegenüber dem anderen Leitblech (7,8) in Querrichtung des Kompensators verschiebbar ist.

9. Kompensator nach einem der vorhergehenden Ansprüche, **dadurch gekennzeichnet, dass** die Toträume, die sich
- zwischen dem Einlassring (41), dem ersten Rohrstutzen (1), dem Einlassleitblech (7) und dem Einlassrohr (4), sowie
- zwischen dem Auslassring (51), dem Auslassleitblech (8), dem Auslassrohr(5) und dem zweiten Rohrstutzen (2) bilden, mit Isolationsmaterial ausgefüttert sind.

10. Kompensator nach einem der vorhergehenden Ansprüche, **dadurch gekennzeichnet, dass** wenigstens einer der Toträume, die sich
- zwischen dem ersten Rohrstutzen (1), dem Einlassrohr (4), dem Einlassring (41) und dem Einlassleitblech (7) sowie
- zwischen dem zweiten Rohrstutzen (2), dem Auslassrohr(5), dem Auslassring (51) und dem Auslassleitblech (8) sowie
- zwischen dem Gewebekompensator (6), dem Einlassring (41),
dem Auslassring (5) und dem Koppelleitblech (9) bilden, permanent oder intermittierend mit Sperrluft (S) beaufschlagt werden.

11. Kompensator nach Anspruch 9 oder 10, **dadurch gekennzeichnet, dass** wenigstens einer der Toträume über einen Rohranschluss an eine Absaugung (A) angeschlossen ist.

12. Kompensator nach einem der vorhergehenden Ansprüche, **dadurch gekennzeichnet, dass**
- die Rohre (4,5) und/oder
- die Ringe (41,51) mit der Ausbuchtung (42) und der Einbuchtung (51) und/oder
- die Leitbleche (7,8)
auf den zu den Toträumen weisenden Flächen mit Isolationsmaterial aufgefüttert sind.

13. Kompensator nach einem der vorhergehenden Ansprüche, **dadurch gekennzeichnet, dass**
- die Rohre (4,5) und
- die Ringe (41,51) mit der Ausbuchtung (42) und der Einbuchtung (51) und
- die Leitbleche (7,8,9) aus elektrisch leitfähigem Material bestehen und über
- je ein eigenes Erdungskabel oder
- ein gemeinsames Erdungskabel oder
- eine andere Erdungsvorrichtung
mit einem Erdungsanschluss elektrisch leitend verbunden sind.

14. Kompensator nach einem der vorhergehenden Ansprüche, **dadurch gekennzeichnet, dass** die Erdung eine elektrisch leitende Verbindung zu der Außenfläche (11) des ersten Rohrstutzens (1) und/oder zur Außenfläche (21) des zweiten Rohrstutzens (2) ist.

15. Kompensator nach einem der vorhergehenden Ansprüche, **dadurch gekennzeichnet, dass** das Einlassrohr (4) und das Auslassrohr (5) durch ein flexibles Abdichtelement (61) miteinander verbunden werden, dass innerhalb des Gewebekompensators (6) angeordnet ist, und durch das Einlassrohr (4) und das flexibles Abdichtelement (61) und das Auslassrohr (5) und den Gewebekompensator (6) ein Druckraum begrenzt wird, der über den Sperrluftanschluss S1 unter permanenten Überdruck setzbar ist

16. Kompensator nach Anspruch 15, **dadurch gekennzeichnet, dass** für ein Auslassrohr (5), das vorrangig in axialer Richtung gegen das Einlassrohr (4) bewegbar ist, das flexible Abdichtelement (61) nur auf dem Einlass- oder dem Auslassrohr (5) befestigt ist und auf dem jeweils anderen Rohr (5,4) mit einer Lippe oder ähnlichem aufliegt.

## Claims

1. Compensator for connecting a first pipe socket (1) to a second pipe socket (2) that is spaced from said first pipe socket and movable with respect thereto, comprising
- an inlet pipe (4), which is coaxially fixed on the outlet opening (12) of the first pipe socket (1) and
- an outlet pipe (5),
- which is arranged approximately coaxially to the inlet pipe (4) and
- is spaced therefrom and
- is coaxially fixed on the inlet opening (22) of the second pipe socket (2) and
- a fabric compensator (6), which connects the inlet pipe (4) and outlet pipe (5) to one another, wherein
- all the aforementioned pipes (1, 2, 4, 5) allow through-flow by dust-laden gas (3), in the direction from the first pipe socket (1) to the second pipe socket (2), wherein
a hollow cylindrical inlet guide plate (7) is fastened on the inlet pipe (4), close to the first pipe socket (1), of which the radius (71) approximately corresponds to the inner radius (13) of the first pipe socket (1), **characterised in that** the inlet guide plate (7) is connected
- to a plurality of radially extending bridges (72) in the vicinity of the first pipe socket (1) and
- to a surrounding inlet ring (41) remote from the first pipe socket (1),
which are in each case fastened on the inlet pipe (4) and a hollow cylindrical outlet guide plate (8) is fastened via an outlet ring (51) on the outlet pipe (5) and **in that**, into the inlet ring (41), a surrounding protrusion (42) is formed,
- which projects into a surrounding recess (52) on the outlet ring (51), wherein
- the profile of said recess (52) is formed so as to be approximately complementary to the profile of the protrusion (42) and
- is enlarged by the movement distance, which is determined by the maximum movements of the two pipe sockets (1, 2) with respect to one another.

2. Compensator according to claim 1,
**characterised in that** the inlet guide plate (7) is connected to the bridges (72) and the inlet ring (41) **in that** it lies thereon via a collar and/or a shoulder, wherein relative movements between the inlet guide plate (7) and the bridges (72) and/or the inlet ring (41) are possible.

3. Compensator according to one of the preceding claims,
**characterised in that** there is disposed on the outlet opening of the first pipe socket (1), a nozzle (D), within which the inner radius (13) of the first pipe socket (1) is tapered.

4. Compensator according to one of the preceding claims,
**characterised in that** the length of the hollow cylindrical inlet guide plate (7) does not exceed the sum of the lengths of the inlet pipe (4) and of the outlet pipe (5).

5. Compensator according to one of the preceding claims,
**characterised in that**
the inlet pipe (4) is fastened on the outer surface (11) of the first pipe socket (1) and/or
- the outlet pipe (5) is connected to the outer surface (21) of the second pipe socket (2).

6. Compensator according to one of the preceding claims, **characterised in that** the hollow cylindrical outlet guide plate (8)
- which consists of contiguous or mutually overlapping hollow cylindrical segments and
- of which the radius (81) is greater than the radius (71) of the inlet guide plate (7) and
- the inlet guide plate (7) partially covers the compensator in the longitudinal direction (31) of the compensator and
- which is connected via a surrounding outlet ring (51) to the outlet pipe (5)
merges into the inlet opening (22) of the second pipe socket (2), in the process, with at least one hollow cylindrical segment, partially overlapping the pipe socket (2) in the axial direction.

7. Compensator according to claim 3, **characterised in that** the internal diameter (23) of the second pipe socket (2) - starting at its inlet opening (23) - continually narrows to the extent that it is reduced approximately to the radius (71) of the inlet guide plate (7).

8. Compensator according to one of the preceding claims, **characterised in that** the inlet guide plate (7) and the outlet guide plate (8) are connected to one another via a floating coupling guide plate (9),
- which can be displaced in the longitudinal direction (31) of the compensator with respect to one of the two guide plates (7,8) and
- which can be displaced in the transverse direction of the compensator with respect to the other guide plate (7,8).

9. Compensator according to one of the preceding claims, **characterised in that** the dead spaces that form
- between the inlet ring (41), the first pipe socket (1), the inlet guide plate (7) and the inlet pipe (4), and
- between the outlet ring (51), the outlet guide plate (8), the outlet pipe (5) and the second pipe socket (2)
are lined with insulation material.

10. Compensator according to one of the preceding claims, **characterised in that** at least one of the dead spaces that form
- between the first pipe socket (1), the inlet pipe (4), the inlet ring (41), and the inlet guide plate (7) as well as
- between the second pipe socket (2), the outlet pipe (5), the outlet ring (51) and the outlet guide plate (8) as well as
- between the fabric compensator (6), the inlet ring (41), the outlet ring (5) and the coupling guide plate (9)
are permanently or intermittently acted on by barrier air (S).

11. Compensator according to claim 9 or 10, **characterised in that** at least one of the dead spaces is connected via a pipe connector to a suction means (A).

12. Compensator according to one of the preceding claims, **characterised in that**
- the pipes (4,5) and/or
- the rings (41, 51), with the protrusion (42) and the recess (51) and/or
- the guide plates (7, 8)
are lined on the faces facing the dead spaces with insulation material.

13. Compensator according to one of the preceding claims,
**characterised in that**
- the pipes (4,5) and
- the rings (41, 51), with the protrusion (42) and the recess (51) and
- the guide plates (7,8,9) are made of electrically conducting material and are electrically conductively connected
- via an earthing cable in each case or
- via a common earthing cable or
- via another earthing device
to an earthing connection

14. Compensator according to one of the preceding claims, **characterised in that** the earthing is an electrically conductive connection to the outer surface (11) of the first pipe socket (1) and/or to the outer surface (21) of the second pipe socket (2).

15. Compensator according to one of the preceding claims, **characterised in that** the inlet pipe (4) and the outlet pipe (5) are connected together by means of a flexible sealing element (61), which is disposed within the fabric compensator (6) and the inlet pipe (4) and the flexible sealing element (61) and the outlet pipe (5) and the fabric compensator (6) define a pressure chamber, which can be placed under permanent superatmospheric pressure by means of the barrier air connection S1.

16. Compensator according to claim 15, **characterised in that**, for an outlet pipe (5) that can be moved principally in the axial direction towards the inlet pipe (4), the flexible sealing element (61) is only fastened on the inlet or the outlet pipe (5) and lies on the other pipe (5,4) in each case lines via a lip or similar.

## Revendications

1. Compensateur destiné à relier une première tubulure (1) avec une seconde tubulure (2) située à une certaine distance et au contraire mobile, consistant en
• un tuyau d'entrée (4) qui est fixé au moyen d'un raccord coaxial à l'ouverture de sortie (12) de la première tubulure (1) et
• un tuyau de sortie (5)
• qui est disposé de façon à peu près coaxiale par rapport au tuyau d'entrée (4) et
• est situé à une certaine distance de ce dernier,
• en étant fixé de façon coaxiale sur l'ouverture d'entrée (22) de la seconde tubulure (2) et
• un compensateur de tissu (6), qui relie le tuyau d'entrée (4) au tuyau de sortie (5), sachant que
• tous les tuyaux préalablement nommés (1, 2, 4, 5) peuvent être injectés avec du gaz chargé en poussière (3), qui est orienté de la première tubulure (1) vers la seconde tubulure, sachant qu'une tôle directrice d'entrée cylindrique creuse (7) est fixée au tuyau d'entrée (4) à proximité de la première tubulure (1), dont le rayon (71) correspond à peu près au rayon intérieur (13) de la première tubulure (1),
**caractérisé par le fait que** la tôle directrice d'entrée (7)
• est reliée par plusieurs traverses (72) ayant un parcours radial à proximité de la première tubulure (1) et
• par une bague d'entrée (41) périphérique loin de la première tubulure (1),
qui sont fixées à chaque fois sur le tuyau d'insertion (4), une tôle de sortie cylindrique creuse (8) étant fixée par l'intermédiaire d'une bague de sortie (41) sur le tuyau de sortie (5), un décrochement périphérique (42) étant formé dans la bague d'entrée (41),
• qui dépasse dans une échancrure (52) périphérique sur la bague de sortie (51), sachant que
• le profil de cette échancrure (52) est formé de façon à peu près complémentaire par rapport au profil du décrochement (42) et
• est agrandi de la distance de déplacement qui est prescrite par les déplacements maximaux des deux tubulures (1, 2) l'une par rapport à l'autre.

2. Compensateur selon la revendication 1, **caractérisé par le fait que** la tôle directrice d'entrée (7) est ainsi reliée avec les traverses (72) et la bague d'entrée (41), de façon à reposer sur elle avec un col et/ou un talon, sachant que des déplacements relatifs sont possibles entre la tôle directrice d'entrée (7) et les traverses (72) et/ou la bague d'entrée (41).

3. Compensateur selon une des revendications précédentes, **caractérisé par le fait qu'**une buse (D) est disposée sur l'ouverture de sortie de la première tubulure (1), à l'intérieur de laquelle le rayon intérieur (13) de la première tubulure (1) s'amincit.

4. Compensateur selon une des revendications précédentes, **caractérisé par le fait que** la longueur de la tôle directrice d'entrée cylindrique creuse (7) ne dépasse pas la somme des longueurs du tuyau d'entrée (4) et du tuyau de sortie (5).

5. Compensateur selon une des revendications précédentes, **caractérisé par le fait**
• **que** le tuyau d'entrée (4) est fixé sur la surface extérieure (11) de la première tubulure (1) et/ou
• le tuyau de sortie (5) est relié à la surface extérieure (21) de la seconde tubulure (2).

6. Compensateur selon une des revendications précédentes, **caractérisé par le fait que** la tôle directrice de sortie cylindrique creuse (8)
• qui consiste en segments de cylindres creux voisins ou se chevauchant et
• dont le rayon (81) est supérieur au rayon (71) de la tôle directrice d'entrée (7) et
• qui recouvre en partie la tôle directrice d'entrée (7) dans le sens longitudinal (31) du compensateur et
• qui est relié au tuyau de sortie (5) par l'intermédiaire d'une bague de sortie périphérique (51)
passe dans l'ouverture d'entrée (22) de la seconde tubulure (2) et chevauche à cette occasion en partie la tubulure (2) dans le sens axial avec au moins un segment cylindrique creux.

7. Compensateur selon la revendication 3, **caractérisé par le fait que** le diamètre intérieur (23) de la seconde tubulure (2) - en commençant depuis l'ouverture de son entrée (23) - se rétrécit de façon continue jusqu'à ce qu'elle soit réduite à peu près au rayon (71) de la tôle directrice d'entrée (7).

8. Compensateur selon une des revendications précédentes, **caractérisé par le fait que** la tôle directrice d'entrée (7) et la tôle directrice de sortie (8) sont reliées entre elles par l'intermédiaire d'une tôle directrice de couplage flottante (9).

9. Compensateur selon une des revendications précédentes, **caractérisé par le fait que** les espaces morts qui se forment
• entre la bague d'entrée (41), la première tubulure (1), la tôle directrice d'entrée (7) et le tuyau d'entrée (4), ainsi
• qu'entre la bague de sortie (51), la tôle directrice de sortie (8), le tuyau de sortie (5) et la seconde tubulure (2)
sont remplis de matériau d'isolation.

10. Compensateur selon une des revendications précédentes, **caractérisé par le fait qu'**au moins un des espaces morts qui se forment
• entre la première tubulure (1), le tuyau d'entrée (4), la bague d'entrée (41) et la tôle directrice d'entrée (7) ainsi
• qu'entre la seconde tubulure (2), le tuyau de sortie (5), la bague de sortie (51) et la tôle directrice de sortie (8) ainsi
• qu'entre le compensateur de tissu (6), la bague d'entrée (41), ), la bague de sortie (51) et la tôle directrice de couplage (9) sont alimentés en air de barrage (S) de façon permanente ou intermittente.

11. Compensateur selon une des revendications 9 ou 10, **caractérisé par le fait qu'**au moins un des espaces morts est raccordé à une aspiration (A) par l'intermédiaire d'un raccordement de tuyau.

12. Compensateur selon une des revendications précédentes, **caractérisé par le fait que**
• les tuyaux (4, 5) et/ou
• les bagues (41, 51) avec le déversement (42) et l'échancrure (51) et/ou
• les tôles directrices (7, 8)
sont remplis avec du matériau d'isolation sur les surfaces tournées vers les espaces morts.

13. Compensateur selon une des revendications précédentes, **caractérisé par le fait que**
• les tuyaux (4, 5) et
• les bagues (41, 51) sont reliés avec le déversement (42) et l'échancrure (51) et
• que les tôles directrices (7, 8, 9) consistent en matériau conducteur électriquement
et sont reliés en étant électriquement conducteurs avec un raccordement de mise à la terre via
• un câble de mise à la terre chacun ou
• un câble de mise à la terre commun ou
• un autre dispositif de mise à la terre.

14. Compensateur selon une des revendications précédentes, **caractérisé par le fait que** la mise à la terre est une liaison conductrices électriquement vers la surface extérieure (11) de la première tubulure (1) et/ou vers la surface extérieure (21) de la seconde tubulure (2).

15. Compensateur selon une des revendications précédentes, **caractérisé par le fait que** le tuyau d'entrée (4) et le tuyau de sortie (5) sont reliés ensemble par l'intermédiaire d'un élément d'étanchéité souple (61) qui est disposé à l'intérieur du compensateur de tissu (6), et qu'un espace de pression, qui peut être mis en surpression permanente via la prise d'air de barrage S1, est limité par le tuyau d'entrée (4) et l'élément d'étanchéité souple (61), et le tuyau de sortie (5) et le compensateur de tissu (6).

16. Compensateur selon la revendication 15, **caractérisé par le fait que** pour un tuyau de sortie (5), qui peut être déplacé principalement dans le sens axial contre le tuyau d'entrée (4), l'élément d'étanchéité souple (61) est fixé seulement sur le tuyau d'entrée ou de sortie (51) et repose sur chaque autre tuyau (5, 4) avec une lèvre ou quelque chose de semblable.
